# EUROPÄISCHE PATENTANMELDUNG

(11) **EP 4 545 360 A1**
(43) Veröffentlichungstag der Anmeldung: **30.04.2025**
(21) Anmeldenummer: 24208751.8
(22) Anmeldetag: 24.10.2024
(51) Int. Cl.: B60R 13/10

(54) **TECHNOLOGIE ZUR HERSTELLUNG VON KFZ-KENNZEICHENSCHILDERN MIT ERHÖHTER SICHERHEIT, INSBESONDERE ROHLING FÜR KFZ-KENNZEICHENSCHILD**

(30) Priorität: 24.10.2023 DE 102023129277
(71) Anmelder: Erich Utsch AG, 57080 Siegen (DE)
(72) Erfinder: KÖLSCH, Jörg, 57234 Wilnsdorf (DE)
(74) Vertreter: Patentanwälte Bauer Vorberg Kayser

(57) **Zusammenfassung**

Die Erfindung betrifft einen Rohling (1) für ein Kfz-Kennzeichenschild, mit einer Platine (3), die vorderflächig mit einer retroreflektierenden Folie (4) beschichtet ist, wobei die retroreflektierende Folie (4) eine flächenhaft ausgedehnte Metallschicht umfasst, die einfallendes Licht reflektiert. Der Rohling (1) umfasst erfindungsgemäß einen NFC-Tag (2). Die Erfindung betrifft ferner ein retroreflektierendes Kfz-Kennzeichenschild mit einem solchen Rohling (1) sowie ein Kennzeichensystem mit einem Rohling (1) oder mit einem Kfz-Kennzeichenschild. Außerdem wird eine Maschine zur Herstellung von Rohlingen (1) vorgeschlagen.

## Beschreibung

Gegenstand der vorliegenden Erfindung ist ein Rohling für ein Kfz-Kennzeichenschild, ein Kfz-Kennzeichenschild mit einem Rohling, ein Kennzeichensystem umfassend einen Rohling oder ein Kfz-Kennzeichenschild und ein Lesegerät sowie eine Maschine zur Herstellung eines Rohlings für ein Kfz-Kennzeichenschild oder eines Kfz-Kennzeichenschilds mit einem Rohling.

Kfz-Kennzeichenschilder werden heute als amtliche Dokumente angesehen, die eine relevante Bedeutung für die öffentliche Sicherheit haben. Es besteht daher ein Bedarf an Technologie zur Herstellung von Kfz-Kennzeichenschildern mit erhöhter Sicherheit, insbesondere erhöhter Fälschungssicherheit.

Entsprechende Kfz-Kennzeichenschilder bzw. Rohlinge für deren Herstellung sowie Systeme und Verfahren zur Herstellung von Rohlingen bzw. Kfz-Kennzeichenschildern mit erhöhter Sicherheit sind beispielsweise aus der WO 2008/135921 A1, der DE 10 2008 025 104 A1, der DE 10 2016 100 935 A1 sowie der DE 10 2016 100 929 A1 bekannt.

Aufgabe der vorliegenden Erfindung ist es, einen Rohling für ein Kfz-Kennzeichenschild, ein Kfz-Kennzeichenschild mit einem Rohling, ein Kennzeichensystem umfassend einen Rohling oder ein Kfz-Kennzeichenschild und ein Lesegerät sowie eine Maschine zur Herstellung eines Rohlings für ein Kfz-Kennzeichenschild mit einem Rohling mit gegenüber den aus dem Stand der Technik vorbekannten Rohlingen, Schildern, Systemen und Maschinen erhöhter Sicherheit anzugeben.

Gelöst wird dies durch einen Rohling für ein Kfz-Kennzeichenschild gemäß Anspruch 1, ein Kfz-Kennzeichenschild gemäß Anspruch 13, ein Kennzeichensystem gemäß Anspruch 14 umfassend einen Rohling oder ein Kfz-Kennzeichenschild und ein Lesegerät sowie eine Maschine gemäß Anspruch 15 zur Herstellung eines Rohlings für ein Kfz-Kennzeichenschild.

Ein erfindungsgemäßer Rohling für ein Kfz-Kennzeichenschild weist eine Platine auf, die vorderflächig mit einer retroreflektierenden Folie beschichtet ist, wobei die retroreflektierende Folie eine flächenhaft ausgedehnte Metallschicht umfasst, die einfallendes Licht reflektiert. Die Erfindung ist dadurch charakterisiert, dass der Rohling einen NFC-Tag umfasst.

Unter einem NFC-Tag ist im Zusammenhang mit der vorliegenden Erfindung ein RFID-Chip zu verstehen, der zur Near Field Communication (dt. Nahfeldkommunikation, abgekürzt NFC) eingerichtet ist. NFC ist ein auf der RFID-Technik basierender internationaler Übertragungsstandard zum kontaktlosen Austausch von Daten per elektromagnetischer Induktion über kurze Strecken von wenigen Zentimetern. Derzeit erfolgt diese mittels lose gekoppelter Spulen und mit einer Daten-übertragungsrate von maximal 424 kBit/s. Falls künftige Fassungen des NFC-Standards höhere Datenraten vorsehen sollten, dann wären auch diese mit der vorliegenden Erfindung vereinbar. Die kontaktlose Kommunikation erfolgt bevorzugt mit einer Frequenz von 13.56 MHz. Der NFC-Tag umfasst vorzugsweise sowohl einen Chip als auch eine an den Chip angeschlossene Antenne. Der Chip weist vorzugsweise eine Schaltung zur Signalverarbeitung und/oder zur Datenverarbeitung auf. Ferner weist der Chip vorzugsweise mindestens einen Datenspeicher auf. Bei der Antenne kann es sich erfindungsgemäß um eine Aluminiumantenne handeln. Bevorzugt handelt es sich allerdings um eine Kupferantenne. Insbesondere kann ein NFC-Tag im Zusammenhang mit der vorliegenden Erfindung als ein selbstklebender Sticker ausgebildet sein. Weiterhin kann im Zusammenhang mit der vorliegenden Erfindung ein NFC-Tag zumindest einseitig mit einem Dielektrikum beschichtet sein.

Ein erfindungsgemäßes retroreflektierendes Kfz-Kennzeichenschild weist einen erfindungsgemäßen Rohling auf und ist mit einer individuellen Kennzeichenlegende versehen. Diese Kennzeichenlegende kann geprägt sein oder aufgedruckt. Geprägte Kennzeichenlegenden sind vorteilhaft erhaben geprägt, wobei weiter vorteilhaft die erhaben geprägten Flächen eingefärbt sind, insbesondere mittels Farbübertrags von einer Thermotransferfolie oder mittels Digitaldrucks. Für die farbige Ausbildung der Legende auf flachen Platinen haben sich Digitaldruckverfahren besonders bewährt.

Vorteilhaft ist das Material der Platine zur Ausbildung der Legende und ggf. eines umlaufenden Rands mechanisch prägbar. Besonders bevorzugt besteht die Platine aus einem Metallblech aus Aluminium, aus einer Aluminiumlegierung oder aus Stahl.

Besondere Vorteile bezüglich der Einsatzmöglichkeiten ergeben sich, wenn im NFC-Tag des erfindungsgemäßen Rohlings bzw. des erfindungsgemäßen Kfz-Kennzeichenschilds Informationen zu mindestens einer der folgenden Informationskategorien gespeichert sind:
a. eine UID des NFC-Tags,
b. eine Seriennummer des Rohlings,
c. ein Format der Platine,
d. eine Farbe der retroreflektierenden Folie,
e. ein Hersteller des Rohlings,
f. eine Identifikation des Rohlings oder des Kfz-Kennzeichenschilds als frontseitiger oder heckseitiger Rohling oder als Teil eines frontseitigen oder heckseitigen Kfz-Kennzeichenschilds,
g. eine Identifikation eines Fahrzeughalters,
h. eine Identifikation eines Kfz-Kennzeichenschild-Individualisierungsbetriebs,
i. eine Gültigkeitsdauer eines Kfz-Kennzeichenschilds,
j. eine Gültigkeitsdauer einer technischen Prüfung,
k. eine Fahrzeug-Identifizierungsnummer,
l. eine Information über eine Lieferkette bei der Produktion des Kfz-Kennzeichenschilds oder des Rohlings,
m. eine Legende des Kfz-Kennzeichenschilds.

Nach einer vorteilhaften Variante der Erfindung sind die Informationen in einem schreibgeschützten Speicher oder in einem schreibgeschützten Speicherbereich in dem NFC-Tag hinterlegt. Auf diese Weise wird eine Manipulation dieser Daten unterbunden. Werden die Daten aus dem NFC-Tag ausgelesen, so kann darauf vertraut werden, dass diese im Speicher des NFC-Tags nicht verändert wurden.

Es hat sich überraschend herausgestellt, dass eine Nahfeldkommunikation mit einem NFC-Tag auch dann möglich ist, wenn der NFC-Tag zwischen der Platine und der retroreflektierenden Folie angeordnet ist.

Dies gilt zum Beispiel dann, wenn marktübliche retroreflektierende Folien für die Herstellung von Kfz-Kennzeichenschildern verwendet werden. Hierbei handelt es sich zum Beispiel um Reflexfolien, wie sie für die Verwendung bei Verkehrsschildern gängig und dem Fachmann bekannt sind. Diese können insbesondere eine metallische Schicht und/oder eine metallische Struktur beinhalten.

Im Zusammenhang mit der vorliegenden Erfindung haben sich NFC-Tags besonders bewährt, die ISO 14443 konform sind, beispielsweise der NXP NTAG213 des Herstellers NXP Semiconductors N.V.. Ohne Abschirmung sind diese Chips für eine Lesereichweite von wenigen Zentimetern ausgelegt.

Weiterhin haben sich NFC-Tags bewährt, die ISO 15693 konform sind. Ohne Abschirmung sind diese Chips für eine größere Lesereichweite geeignet als ISO 14443 konforme Chips. Für die Kommunikation nach ISO 15693 geeignet sind beispielsweise der ICODE SLIX2 Tag, der ICODE 3 Tag und der ICODE DNA Tag des Herstellers NXP Semiconductors N.V..

In einer besonders bevorzugten Ausgestaltung ist die Platine eines erfindungsgemäßen Rohlings elektrisch leitfähig ausgebildet. Insbesondere kann die Platine einen metallischen Werkstoff umfassen oder aus einem metallischen Werkstoff bestehen. In einer vorteilhaften Weiterbildung ist zwischen dem NFC-Tag und der Platine eine dielektrische Schicht angeordnet. Diese Variante kann insbesondere dann vorteilhaft zur Anwendung kommen, falls der Rohling oder zumindest die Platine elektrisch leitfähig ist. Wenn der NFC-Tag unmittelbar auf einer elektrisch leitfähigen, insbesondere metallischen Oberfläche angebracht ist, kann es zu Störungen der Datenübertragung kommen. Dies kann durch eine dielektrische Schicht verhindert werden. Die dielektrische Schicht wird vorteilhaft durch ein Ferrit gebildet. Ferrite eignen sich besonders gut zur Abschirmung der Antenne von der Platine.

In einer weiteren vorteilhaften Ausgestaltung der Erfindung ist zwischen der Platine und der retroreflektierenden Folie eine Zwischenlage angeordnet, deren Stärke zumindest der Stärke des NFC-Tags entspricht, wobei die Zwischenlage eine Aussparung aufweist, deren Größe an die Abmessungen des NFC-Tags angepasst ist, wobei der NFC-Tag in der Aussparung angeordnet ist.

Für die Erfindung geeignete marktübliche NFC-Tags weisen vorzugsweise eine Stärke von unter 0,2 Millimetern auf, z.B. der NXP NTAG213. Es können jedoch auch NFC-Tags mit einer Stärke von 0,2 Millimetern oder mehr eingesetzt werden.

In einer weiteren vorteilhaften Ausgestaltung der Erfindung weist die Platine eine Aussparung auf, deren Größe an die Abmessungen des NFC-Tags angepasst ist, wobei der NFC-Tag in der Aussparung angeordnet ist. Dabei ist die Aussparung zumindest in der Erstreckungsrichtung der Platine an die Abmessung des einzubringenden NFC-Tags in dessen Erstreckungsrichtung angepasst, bevorzugt mit einem geeigneten Übermaß.

Weiter vorteilhaft ist die Tiefe der Aussparung an die Stärke des in die Aussparung einzubringenden NFC-Tags angepasst, vorteilhaft mit einem geeigneten geringen Übermaß.

In einer vorteilhaften Ausgestaltung eines erfindungsgemäßen Rohlings mit Aussparung wird die Aussparung in der Platine mittels abtragender Materialbearbeitung oder mittels lokal verformender Materialbearbeitung erzeugt. Abtragende Materialbearbeitung kann z.B. Fräsen sein oder auch Stanzen, formgebende Materialbearbeitung kann beispielsweise Umformen oder lokales Verdichten durch mechanisches Prägen sein.

Vorteilhaft ist die Aussparung in der Platine eines erfindungsgemäßen Rohlings rückseitig ge- oder verschlossen. Geschlossen kann die Aussparung sein, wenn bei der Materialbearbeitung zur Ausbildung der Aussparung lokal nicht alles Material der Platine entfernt wurde.

Verschlossen kann die Aussparung sein, wenn bei der Materialbearbeitung zur Ausbildung der Aussparung lokal alles Material der Platine entfernt wurde, z.B. durch Ausstanzen eines Durchgangslochs, dieses nachfolgend aber wieder verschlossen wurde, z.B. mittels einer zumindest lokal aufgebrachten Folie, die vorteilhaft selbstklebend ausgebildet ist.

In einer besonders vorteilhaften Ausgestaltung der Erfindung ist der NFC-Tag in der Aussparung des Rohlings verklebt oder vergossen, insbesondere mit einer kunststoffbasierten Klebe- bzw. Vergussmasse.

Nach einer alternativen Ausführungsform der Erfindung ist der NFC-Tag auf einer Seite der retroflektierenden Folie aufgebracht, die der Platine entgegengesetzt ist.

Der NFC-Tag kann beispielsweise auf die retroflektierende Folie aufgeklebt sein. Es ist vorteilhaft, wenn der NFC-Tag mit dem Rohling untrennbar verbunden ist. So ist es erfindungsgemäß möglich, dass der NFC-Tag mit einem Lack überzogen oder überdruckt ist. Der NFC-Tag wird somit von dem Lack bedeckt und kann sich nicht ohne weiteres von der Platine oder der retroreflektierenden Folie lösen. Nach einer weiteren Ausführungsform der Erfindung wird der NFC-Tag auf der retroreflektierenden Folie auf sonstige Weise fixiert, wobei er beispielsweise von einem anderen Material überzogen oder überdruckt sein kann.

In einer weiteren vorteilhaften Ausgestaltung der Erfindung weist die retroreflektierende Folie des Rohlings im Bereich des NFC-Tags ein Sicherheitsmerkmal auf. Hierbei kann es sich um aufgedruckte Zeichen wie Hoheitszeichen handeln, es kann sich aber auch um Siegel handeln, die beispielsweise mittels Heißprägens aufgebracht sein können. Das Aufbringen eines Sicherheitsmerkmals verringert die Erkennbarkeit des NFC-Tags und verringert somit die Gefahr von Manipulationsversuchen.

Es ist vorteilhaft, wenn der NFC-Tag dazu eingerichtet ist, ein Datenpaket auszugeben, das eine Datenstruktur und eine digitale Signatur von in der Datenstruktur enthaltenen Daten umfasst. Unter der Ausgabe der Daten ist insbesondere zu verstehen, dass der NFC-Tag das Datenpaket drahtlos übermittelt. Anhand der digitalen Signatur lässt sich die Integrität von Daten, die in der Datenstruktur gespeichert sind, verifizieren. Beispielsweise kann die Datenstruktur mit Hilfe eines geheimen Signaturschlüssels (Private Key) signiert werden, wodurch die digitale Signatur erhältlich ist. Dem geheimen Signaturschlüssel ist ein öffentlicher Signaturschlüssel (Public Key) zugeordnet. Unter Verwendung des öffentlichen Signaturschlüssels lässt sich verifizieren, dass die Daten in der Datenstruktur anhand des geheimen Signaturschlüssels signiert wurden. Somit kann überprüft werden, dass die Daten in der Datenstruktur nicht manipuliert wurden sowie dass die Daten von einem bestimmten Urheber stammen, der im Besitz des geheimen Signaturschlüssels ist. Der vorbeschriebene Mechanismus kann mittels diverser asymmetrischer Kryptosysteme implementiert werden, zum Beispiel unter Verwendung des Kryptosystems RSA (Rivest-Shamir-Adleman).

Vorzugsweise enthält die Datenstruktur Daten zu mindestens einer der vorhergehend aufgeführten Informationskategorien, die im NFC-Tag gespeichert sein können. So kann die Datenstruktur insbesondere Daten betreffend eine UID des NFC-Tags, eine Seriennummer des Rohlings, ein Format der Platine, eine Farbe der retroreflektierenden Folie, einen Hersteller des Rohlings, eine Identifikation des Rohlings oder des Kfz-Kennzeichenschilds als frontseitiger oder heckseitiger Rohling oder als Teil eines frontseitigen oder heckseitigen Kfz-Kennzeichenschilds, eine Identifikation eines Fahrzeughalters, eine Identifikation eines Kfz-Kennzeichenschild-Individualisierungsbetriebs, eine Gültigkeitsdauer eines Kfz-Kennzeichenschilds, eine Gültigkeitsdauer einer technischen Prüfung, eine Fahrzeug-Identifizierungsnummer, eine Information über eine Lieferkette bei der Produktion des Kfz-Kennzeichenschilds oder des Rohlings, und/oder eine Legende des Kfz-Kennzeichenschilds enthalten. Darüber hinaus können in der Datenstruktur auch Daten sonstiger Kategorien gespeichert sein.

Nach einer vorteilhaften Ausführungsform der Erfindung erzeugt der NFC-Tag die Datenstruktur im Fall einer Anfrage dynamisch. So ist es beispielsweise möglich, dass der NFC-Tag eine drahtlos übermittelte Anfrage erhält, in der angegeben ist, welche Daten bzw. Daten welcher Informationskategorien ausgegeben werden sollen. In diesem Fall generiert der NFC-Tag die Datenstruktur gemäß der Anfrage sowie eine zugehörige digitale Signatur. Alternativ sind die Datenstruktur und/oder die digitale Signatur in dem NFC-Tag vorab hinterlegt bzw. gespeichert. Bei Erhalt einer Anfrage wird das Datenpaket, enthaltend sowohl die Datenstruktur als auch die digitale Signatur, von dem NFC-Tag aus einem Speicher des NFC-Tags ausgelesen und drahtlos ausgegeben. Die Datenstruktur und ihre digitale Signatur sind bevorzugt in einem schreibgeschützten Speicher oder in einem schreibgeschützten Speicherbereich in dem NFC-Tag gespeichert.

Eine vorteilhafte Variante der Erfindung sieht vor, dass die Datenstruktur eine UID des NFC-Tags und eine Fahrzeug-Identifizierungsnummer enthält. Bei der UID (Unique Identifier) handelt es sich im Sinne der Erfindung um einen eindeutigen Bezeichner, der dem NFC-Tag bzw. einem Chip des NFC-Tags zugeordnet ist. Unter der Fahrzeug-Identifizierungsnummer wird eine Zeichenfolge verstanden, die ein Fahrzeug eindeutig identifiziert. Die Fahrzeug-Identifizierungsnummer kann an unterschiedlichen Stellen an einem Kraftfahrzeug angebracht sein, beispielsweise an der B-Säule des Türrahmens, in der Fahrertür, im Motorraum, im Kofferraum, unter der Motorhaube oder auf dem Armaturenbrett. Wird der NFC-Tag zu Kontrollzwecken ausgelesen, dann kann auf Grundlage der digitalen Signatur sichergestellt werden, dass der NFC-Tag die ausgelesene UID aufweist und einem Kraftfahrzeug mit der ausgelesenen Fahrzeug-Identifizierungsnummer zugeordnet ist. Um zu überprüfen, dass der NFC-Tag bzw. ein diesen enthaltendes Kfz-Kennzeichenschild tatsächlich an dem Fahrzeug angebracht ist, dem es zugeordnet ist, kann eine auf dem betreffenden Fahrzeug angebrachte Fahrzeug-Identifizierungsnummer mit der aus dem NFC-Tag ausgelesenen Fahrzeug-Identifizierungsnummer verglichen werden. Die aus dem NFC-Tag ausgelesene UID kann von einem Benutzer mit einer UID in einer Datenbank abgeglichen werden, beispielsweise, um sicherzustellen, dass ein der UID zugeordneter NFC-Tag noch gültig ist, oder um weitere Informationen aus der Datenbank abzurufen, die dem NFC-Tag mit dieser UID zugeordnet sind.

Das Datenpaket ist bevorzugt ein DigSig Envelope. Mit Hilfe von sogenannten DigSigs kann der NFC-Tag signierte Daten drahtlos ausgeben. DigSigs richten sich nach dem Standard ISO/IEC 20248, wobei im Rahmen der vorliegenden Offenbarung unerheblich sein soll, ob ein DigSig Envelope sich nach ISO/IEC 20248:2018, nach ISO/IEC 20248:2022 oder nach einer späteren Fassung des Standards richtet. Bevorzugt richtet sich ein Format der DigSig jedoch nach dem Standard ISO/IEC 20248:2022, Edition 2, veröffentlicht im Juni 2022. Gemäß dem Standard ISO/IEC 20248 enthält ein DigSig Envelope eine Datenstruktur mit Daten sowie deren zeitgestempelte digitale Signatur.

Signaturen nach ISO/IEC 20248 sind typischerweise kleiner als 512 Bits und eignen sich somit auch für die drahtlose Ausgabe durch einen NFC-Tag. Zur Verteilung öffentlicher Schlüssel zur Prüfung von DigSig-Signaturen kann eine Public Key Infrastructure (PKI) auf Grundlage von X.509 Zertifikaten eingesetzt werden. Es können DigSig Envelopes im "URI"-Format oder im "URI-RAW"-Format verwendet werden. Diese enthalten einen Link, mit dessen Hilfe online verifiziert werden kann, ob die Signatur gültig ist. Es ist jedoch auch eine Offline-Verifikation der Signatur möglich. Alternativ werden DigSig-Envelopes im "RAW"-Format verwendet, bei denen nicht online, sondern ausschließlich offline mit Hilfe dafür vorgesehener Geräte überprüft werden kann, ob die in dem DigSig Envelope enthaltenen Daten korrekt signiert sind.

Es kann erfindungsgemäß vorgesehen sein, dass der NFC-Tag für eine Übertragungsfrequenz optimiert ist, die 13,56 MHz + δ oder 13,56 MHz - δ beträgt. Es kann aufgrund der retroreflektierenden Folie zu einer Frequenzverschiebung δ der drahtlos übertragenen NFC-Signale kommen. Mit anderen Worten kommt es aufgrund der retroreflektierenden Folie zu einer Verstimmung des übertragenen Signals. Bei der Frequenzverschiebung δ handelt es sich um einen Wert ungleich 0 MHz. Somit liegt eine Abweichung von der gängigen NFC-Übertragungsfrequenz von 13,56 MHz vor. Die Frequenzverschiebung δ kann insbesondere abhängig sein von einer Struktur, einer Feinheit, einem Material und/oder einer Dicke der flächenhaft ausgedehnten Metallschicht. Mit anderen Worten kann die Frequenzverschiebung δ vom Typ der verwendeten retroreflektierenden Folie bzw. deren Materialeigenschaften abhängig sein.

Damit eine Datenübertragung trotzdem möglich ist, kann es erforderlich sein, bei dem NFC-Tag eine Antennenanpassung durchzuführen, sodass der NFC-Tag für diese veränderte Übertragungsfrequenz optimiert ist. Dazu kann beispielsweise wie folgt vorgegangen werden. Zunächst wird die durch die Metallschicht bedingte Frequenzverschiebung δ bestimmt. Dies kann entweder experimentell oder auf Grundlage elektromagnetischer Simulation erfolgen. Somit kann die Übertragungsfrequenz 13,56 MHz + δ oder 13,56 MHz - δ ermittelt werden. Auf dieser Grundlage wird ein an diese Frequenz angepasstes Matching-Netzwerk zur Antennenpassung entworfen. Darin enthaltene Widerstände, Induktivitäten und/oder Kapazitäten sind in geeigneter Weise zu dimensionieren. Die hierzu notwendigen Schritte sind dem Fachmann bekannt. Alternativ oder zusätzlich kann eine Antenne des NFC-Tags so dimensioniert werden, dass sie eine für die neu vorgesehene Nennfrequenz angepasste Induktivität aufweist. Mit anderen Worten wird die Antenne an die Verstimmung des NFC-Signals, die durch die retroreflektierende Folie bedingt ist, angepasst. Auf die Induktivität der Antenne wirken sich beispielsweise die Anzahl der Windungen, die Höhe des Antennen-Rechtecks, die Breite des Antennen-Rechtecks und der Radius des Antennendrahts aus. Daraus folgt, dass der NFC-Tag nach vorteilhaften Ausgestaltungsformen der Erfindung eine Antenne und/oder ein Matching-Netzwerk aufweist, welche an eine Struktur, eine Feinheit, ein Material und/oder eine Dicke der flächenhaft ausgedehnten Metallschicht angepasst sind.

Ein erfindungsgemäßes Kennzeichensystem umfasst einen erfindungsgemäßen Rohling oder ein erfindungsgemäßes Kfz-Kennzeichenschild und ein Lesegerät, welches zum Auslesen von Informationen eingerichtet ist, die in dem NFC-Tag gespeichert sind. Als Lesegeräte sind insbesondere marktübliche Smartphones geeignet, die mit einem NFC-Reader ausgestattet sind.

In einer vorteilhaften Weiterbildung weist ein erfindungsgemäßes Kennzeichensystem weiterhin eine Datenbank auf, in welcher Informationen gespeichert sind, die mit den Informationen, die in dem NFC-Tag gespeichert sind, korreliert sind.

In einer vorteilhaften Weiterbildung weist ein erfindungsgemäßes Kennzeichensystem weiterhin eine softwarebasierte Vergleichsinstanz auf, die zum Vergleich von Informationen eingerichtet ist, die im NFC-Tag gespeichert sind, mit Informationen, die in der Datenbank gespeichert sind. Beispielsweise kann das Lesegerät eine UID aus dem NFC-Tag auslesen. Die Datenbank des Kennzeichensystems enthält bevorzugt eine Vielzahl von UIDs, die mit Fahrzeugdaten verknüpft sind. Die Datenbank kann erfindungsgemäß anhand der ausgelesenen UID abgefragt werden, um zugeordnete Fahrzeugdaten wie beispielsweise Informationen zum Halter, eine Kennzeichenlegende oder dergleichen auszulesen.

Eine erfindungsgemäße Maschine zur Herstellung von Rohlingen für Kfz-Kennzeichenschilder eines Kennzeichenrohlings ist dadurch gekennzeichnet, dass die Maschine neben Mitteln zur Bereitstellung einer Platine und Mitteln zur flächigen Applikation einer retroreflektierenden Folie auf der Platine weiterhin Mittel zur Applikation eines NFC-Tags aufweist. Hierbei kann es sich insbesondere um einen vollautomatischen Applikator für als Sticker ausgebildete NFC-Tags handeln.

Ferner wird eine Prägepresse zur Herstellung von Kfz-Kennzeichenschildern vorgeschlagen, sowie ein Verfahren zum Betrieb dieser Prägepresse. Bei der Prägepresse kann es sich um eine Prägepresse gängiger Bauart handeln, zum Beispiel eine hydraulische Prägepresse. Diese prägt eine Kfz-Kennzeichenlegende auf ein Kennzeichenschild und bedruckt nach optionalen Varianten der Erfindung auch das Kennzeichenschild. Die Prägepresse ist vorteilhaft zur Verarbeitung eines erfindungsgemäßen Rohlings eingerichtet. Erfindungsgemäß ist die Prägepresse darüber hinaus mit einer NFC-Programmiervorrichtung ausgestattet, die zum Beschreiben und/oder Programmieren des NFC-Tags eingerichtet ist.

Nach einem erfindungsgemäßen Verfahren prägt die Prägepresse eine Kennzeichenlegende in den Rohling ein, wobei die Prägepresse ferner den NFC-Tag des

Rohlings mit Daten beschreibt. So ist ein erfindungsgemäßes Kennzeichen mit beschriebenem NFC-Tag erhältlich. Die Daten umfassen vorzugsweise die Kennzeichenlegende des Kennzeichens, das bei dem Prägevorgang aus dem Rohling hergestellt wird. Nach vorteilhaften Varianten des Verfahrens beschreibt die Prägepresse den NFC-Tag mit den Daten vor, während und/oder nach dem Prägevorgang.

Ferner ist ein Verfahren zur Herstellung von Rohlingen für Kfz-Kennzeichenschilder denkbar. Das Verfahren weist die Schritte Bereitstellen einer Platine und flächige Applikation einer retroreflektierenden Folie auf der Platine auf. Es ist durch den weiteren Verfahrensschritt der automatisierten Applikation eines NFC-Tags charakterisiert.

In einer vorteilhaften Ausgestaltung des Verfahrens wird der NFC-Tag entweder an der Platine des Rohlings oder an der retroreflektierenden Folie appliziert.

In einer besonders vorteilhaften Ausgestaltung des Verfahrens wird der NFC-Tag so appliziert, dass der NFC-Tag im fertiggestellten Rohling zwischen der Platine des Rohlings und der retroreflektierenden Folie angeordnet ist.

Es wird darauf hingewiesen, dass sämtliche Kombinationen der Merkmale der beigefügten Patentansprüche von der vorliegenden Erfindung mitumfasst sind, es sei denn, bestimmte Kombinationen sind nicht ausführbar.

Weitere Merkmale und Vorteile der Erfindung ergeben sich aus den nachfolgenden Ausführungsbeispielen, die dem Fachmann die Erfindung verdeutlichen sollen, so dass er die Erfindung ausführen kann. Die Ausführungsbeispiele beschränken die Erfindung jedoch nicht.

Dennoch stellen die Ausführungsbeispiele vorteilhafte Ausgestaltungen der Erfindung dar, deren Merkmale - ggf. auch einzeln - zur Konkretisierung der unter Schutz zu stellenden Erfindung verwendet werden können. Dabei zeigt:
Fig. 1 eine schematische Darstellung eines Rohlings für ein Kfz-Kennzeichenschild, bei dem ein NFC-Tag unmittelbar auf eine Aluminiumplatine des Rohlings geklebt ist und von einer retroreflektierenden Folie des Rohlings abgedeckt wird,
Fig. 2 eine schematische Darstellung eines Rohlings für ein Kfz-Kennzeichenschild, bei dem ein NFC-Tag des Rohlings in einer Aussparung einer Platine des Rohlings angeordnet ist,
Fig. 3 eine schematische Darstellung eines Rohlings für ein Kfz-Kennzeichenschild, wobei der Rohling eine Zwischenlage aus einer Kunststofffolie aufweist, deren Stärke einer Stärke eines NFC-Tags des Typs NXP ICODE SLIX2 entspricht,
Fig. 4 eine schematische Darstellung eines Rohlings für ein Kfz-Kennzeichenschild, bei dem ein NFC-Tag des Typs NXP NTAG213 oberseitig auf die retroreflektierende Folie aufgebracht und durch einen geeigneten Lack abgedeckt ist und
Fig. 5 eine schematische Darstellung eines Datenpakets mit einer Datenstruktur und einer digitalen Signatur.

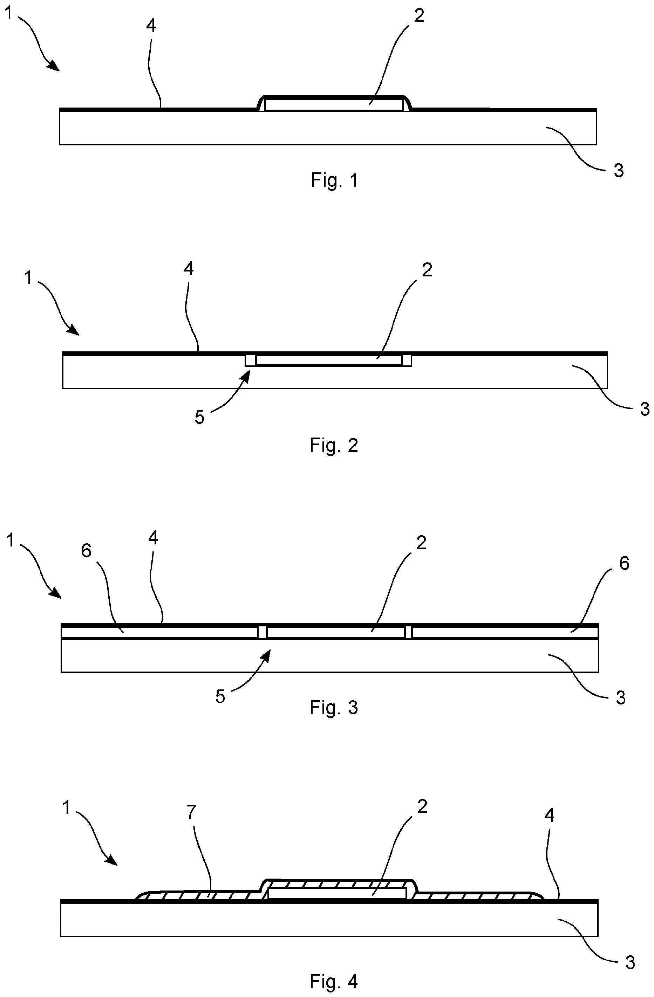

Fig. 1 zeigt eine schematische Darstellung eines Rohlings 1 für ein Kfz-Kennzeichenschild gemäß einem ersten Ausführungsbeispiel, bei dem ein NFC-Tag 2 unmittelbar auf eine Platine 3 des Rohlings 1 geklebt ist und von einer retroreflektierenden Folie 4 des Rohlings 1 abgedeckt wird. Die Platine 3 ist eine Aluminiumplatine. Der NFC-Tag 2 ist vom Typ NXP ICODE SLIX2 und wird über einen automatischen Applikator aufgetragen. Geeignete Applikatoren erlauben hohe Verarbeitungsgeschwindigkeiten, so dass keine Verluste in der Produktionsgeschwindigkeit der Rohlinge 1 auftreten.

Gemäß diesem Ausführungsbeispiel ist die Verfolgung der Applikationsposition des NFC-Tags 2 besonders gut möglich, um mit einer bestimmten Position auf der retroreflektierenden Folie 4 rechnen zu können, da der durch die retroreflektierende Folie 4 abgedeckte NFC-Tag 2 eine lokale Erhöhung ausbildet.

Fig. 2 zeigt eine schematische Darstellung eines Rohlings 1 für ein Kfz-Kennzeichenschild gemäß einem weiteren Ausführungsbeispiel, bei dem ein NFC-Tag 2 des Rohlings 1 in einer Aussparung 5 einer Platine 3 des Rohlings 1 angeordnet ist. Die Platine 3 besteht wiederum aus einem Aluminiumblech. In das Aluminiumblech wird die Aussparung 5 gefräst, deren Tiefe der Dicke des NFC-Tags 2 entspricht. Dabei ist der Durchmesser der gefrästen Aussparung 5 etwas größer als der

Durchmesser des NFC-Tags 2, um Fertigungstoleranzen auszugleichen. Anschließend wird der NFC-Tag 2 in die Aussparung 5 eingebracht und mittels einer retroreflektierenden Folie 4 abgedeckt. Um den Produktionsprozess der Rohlinge 1 nicht zu verlangsamen und um die Position der Aussparung 5 kontrollieren zu können, ist es vorteilhaft, die Aussparung 5 im Zuge der Produktion der Rohlinge 1 zu fräsen.

Fig. 3 zeigt eine schematische Darstellung eines Rohlings 1 für ein Kfz-Kennzeichenschild gemäß einem weiteren Ausführungsbeispiel, wobei der Rohling 1 eine Zwischenlage 6 aus einer Kunststofffolie aufweist, deren Stärke einer Stärke eines NFC-Tags 2 des Typs NXP ICODE SLIX2 entspricht. Dabei kann die Zwischenlage 6 selbstklebend kaschiert sein. Die Zwischenlage 6 bildet eine Aussparung 5 aus, deren Größe an die Abmessungen des NFC-Tags 2 angepasst ist.

Der NFC-Tag 2 wird in die Aussparung 5 eingebracht und mittels einer retroreflektierenden Folie 4 abgedeckt. Das Aufbringen der zusätzlichen Kunststofffolie als eine Zwischenlage 6, in die bereits Aussparungen 5 eingebracht sind, lässt sich problemlos in bestehende Produktionslinien integrieren und beeinflusst die Produktionsgeschwindigkeit nicht nachteilig.
Fig. 4 zeigt eine schematische Darstellung eines Rohlings 1 für ein Kfz-Kennzeichenschild nach einem weiteren Ausführungsbeispiel, bei dem ein NFC-Tag 2 des Typs NXP NTAG213 oberseitig auf eine retroreflektierende Folie 4 aufgebracht und durch einen geeigneten Lack 7 abgedeckt ist. Die retroreflektierende Folie 4 ist auf einer Platine 3 angeordnet. Der Lack 7 wird mittels eines geeigneten Digitaldruckers aufgebracht. Da der NFC-Tag 2 des genannten Typs eine Dicke von etwa 0,13 mm hat, treten in der Regel keine Probleme mit dem Druckkopf des Digitaldruckers auf.

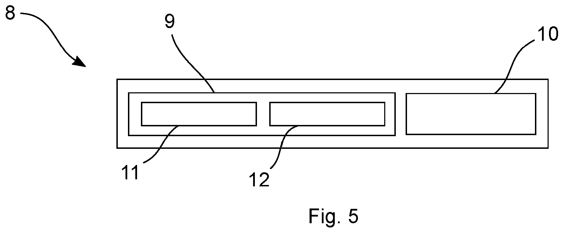

Fig. 5 zeigt ein Datenpaket 8 mit einer Datenstruktur 9 und einer digitalen Signatur 10. Bei dem Datenpaket 8 handelt es sich um eine sogenannte DigSig. Das Datenpaket 8 wird von einem NFC-Tag ausgegeben, der einen Teil eines erfindungsgemäßen Rohlings bildet. In der Datenstruktur 9 ist eine UID des NFC-Tags in einem ersten Datenfeld 11 hinterlegt. Ferner ist in der Datenstruktur 9 in einem zweiten Datenfeld 12 eine Fahrzeug-Identifizierungsnummer eines Kraftfahrzeugs hinterlegt, an dem ein Kfz-Kennzeichenschild anzubringen ist, das aus dem Rohling hergestellt wird. Wenn eine Prüfinstanz das Datenpaket 8 aus dem NFC-Tag ausliest, kann sie die Integrität der Daten in der Datenstruktur 9 mittels der digitalen Signatur 10 überprüfen. Anschließend kann die Prüfinstanz die ausgelesene Fahrzeug-Identifizierungsnummer mit einer weiteren Fahrzeug-Identifizierungsnummer abgleichen, die sie an anderer Stelle an einem Kraftfahrzeug abliest, an dem das Kfz-Kennzeichenschild angebracht ist, das den NFC-Tag enthält. Beispielsweise kann die weitere Fahrzeug-Identifizierungsnummer unter einer Motorhaube des Kraftfahrzeugs abgelesen werden. Stimmen die so ermittelten Fahrzeug-Identifizierungsnummern miteinander überein, so ist das Kfz-Kennzeichenschild am korrekten Kraftfahrzeug angebracht.

### Bezugszeichenliste

1. Rohling
2. NFC-Tag
3. Platine
4. Retroreflektierende Folie
5. Aussparung
6. Zwischenlage
7. Lack
8. Datenpaket
9. Datenstruktur
10. Digitale Signatur
11. Erstes Datenfeld
12. Zweites Datenfeld

## Patentansprüche

1. Rohling (1) für ein Kfz-Kennzeichenschild, mit einer Platine (3), die vorderflächig mit einer retroreflektierenden Folie (4) beschichtet ist, wobei die retroreflektierende Folie (4) eine flächenhaft ausgedehnte Metallschicht umfasst, die einfallendes Licht reflektiert, **dadurch gekennzeichnet, dass** der Rohling (1) einen NFC-Tag (2) umfasst.

2. Rohling (1) gemäß Anspruch 1, **dadurch gekennzeichnet, dass** der NFC-Tag (2) zwischen der Platine (3) und der retroreflektierenden Folie (4) angeordnet ist.

3. Rohling (1) gemäß einem der vorstehenden Ansprüche, **dadurch gekennzeichnet, dass** die Platine (3) aus einem metallischen Werkstoff besteht, wobei zwischen dem NFC-Tag (2) und der Platine (3) eine dielektrische Schicht angeordnet ist, die durch ein Ferrit gebildet wird.

4. Rohling (1) gemäß einem der vorstehenden Ansprüche, **dadurch gekennzeichnet, dass** zwischen der Platine (3) und der retroreflektierenden Folie (4) eine Zwischenlage (6) angeordnet ist, deren Stärke zumindest der Stärke des NFC-Tags (2) entspricht, wobei die Zwischenlage (6) eine Aussparung (5) aufweist, deren Größe an die Abmessungen des NFC-Tags (2) angepasst ist, wobei der NFC-Tag (2) in der Aussparung (5) angeordnet ist.

5. Rohling (1) gemäß einem der Ansprüche 1 bis 3, **dadurch gekennzeichnet, dass** die Platine (3) eine Aussparung (5) aufweist, deren Größe an die Abmessungen des NFC-Tags (2) angepasst ist, wobei der NFC-Tag (2) in der Aussparung (5) angeordnet ist.

6. Rohling (1) gemäß einem der vorstehenden Ansprüche, **dadurch gekennzeichnet, dass** im NFC-Tag (2) Informationen zu mindestens einer der folgenden Informationskategorien gespeichert sind:
a. eine UID des NFC-Tags (2),
b. eine Seriennummer des Rohlings (1),
c. ein Format der Platine (3),
d. eine Farbe der retroreflektierenden Folie (4),
e. ein Hersteller des Rohlings (1),
f. eine Identifikation des Rohlings (1) oder des Kfz-Kennzeichenschilds als ein frontseitiger oder heckseitiger Rohling (1) oder als Teil eines frontseitigen oder heckseitigen Kfz-Kennzeichenschilds,
g. eine Identifikation eines Fahrzeughalters,
h. eine Identifikation eines Kfz-Kennzeichenschild-Individualisierungsbetriebs,
i. eine Gültigkeitsdauer eines Kfz-Kennzeichenschilds,
j. eine Gültigkeitsdauer einer technischen Prüfung,
k. eine Fahrzeug-Identifizierungsnummer,
l. eine Information über eine Lieferkette bei der Produktion des Kfz-Kennzeichenschilds oder des Rohlings (1),
m. eine Legende des Kfz-Kennzeichenschilds.

7. Rohling (1) nach Anspruch 6, **dadurch gekennzeichnet, dass** die Informationen in einem schreibgeschützten Speicher oder in einem schreibgeschützten Speicherbereich in dem NFC-Tag (2) hinterlegt sind.

8. Rohling (1) nach einem der vorstehenden Ansprüche, **dadurch gekennzeichnet, dass** der NFC-Tag (2) dazu eingerichtet ist, ein Datenpaket (8) auszugeben, das eine Datenstruktur (9) und eine digitale Signatur (10) von in der Datenstruktur (9) enthaltenen Daten umfasst.

9. Rohling (1) nach Anspruch 8, **dadurch gekennzeichnet, dass** die Datenstruktur (9) Daten zu mindestens einer der Informationskategorien nach Anspruch 6 enthält.

10. Rohling (1) nach Anspruch 9, **dadurch gekennzeichnet, dass** die Datenstruktur (9) die UID des NFC-Tags (2) und die Fahrzeug-Identifizierungsnummer enthält.

11. Rohling (1) nach einem der Ansprüche 8 bis 10, **dadurch gekennzeichnet, dass** das Datenpaket (8) ein DigSig Envelope ist.

12. Rohling (1) nach einem der vorhergehenden Ansprüche, **dadurch gekennzeichnet, dass** der NFC-Tag (2) für eine Übertragungsfrequenz optimiert ist, die 13,56 MHz + δ oder 13,56 MHz - δ beträgt.

13. Retroreflektierendes Kfz-Kennzeichenschild mit einem Rohling (1) und einer individuellen Kennzeichenlegende, **dadurch gekennzeichnet, dass** der Rohling (1) gemäß einem der vorstehenden Ansprüche ausgebildet ist.

14. Kennzeichensystem umfassend einen Rohling (1) nach einem der Ansprüche 1 bis 12 oder ein Kfz-Kennzeichenschild gemäß Anspruch 13 und ein Lesegerät, welches zum Auslesen von Informationen eingerichtet ist, die in dem NFC-Tag (2) gespeichert sind.

15. Maschine zur Herstellung von Rohlingen (1) für Kfz-Kennzeichenschilder, wobei die Maschine Mittel zur Bereitstellung einer Platine (3) und Mittel zur flächigen Applikation einer retroreflektierenden Folie (4) auf der Platine (3) aufweist, **dadurch gekennzeichnet, dass** die Maschine weiterhin Mittel zur automatisierten Applikation eines NFC-Tags (2) aufweist.
